# EUROPEAN PATENT APPLICATION

(11) **EP 3 232 621 A1**
(43) Date of publication of application: **18.10.2017**
(21) Application number: 17165367.8
(22) Date of filing: 06.04.2017
(51) Int. Cl.: H04L 12/803, H04W 48/20, H04L 12/54, H04W 28/08

(54) **METHODS AND SYSTEMS FOR LOAD BALANCING IN MESH NETWORKS**

(30) Priority: 16.04.2016 US 201615130971
(71) Applicant: General Electric Company, Schenectady, NY 12345 (US)
(72) Inventor: NGOUNOU, Yves Ngambo, Lachine, Québec H8T 3M6 (CA)
(74) Representative: Foster, Christopher Michael

(57) **Abstract**

Provided is a method (500) for load balancing (400) in a mesh network (208). The method (500) includes receiving (504) a signal from a first gateway device of the mesh network (208) and determining (506), responsive to the signal, whether a condition for connecting to the gateway device is satisfied. The method also includes initiating (508) a first connection with the first gateway device (504) when the condition is satisfied. A second connection is initiated (516) between the node (110, 408, 410, 412, 414, 416) and a second gateway device (i) when the condition is not satisfied and (ii) when the first gateway device (504) is at full capacity.

## Description

### BACKGROUND

In typical mesh networks in which lighting controllers are nodes, a single network identifier is used across the entire network and all nodes use that network identifier to connect to a gateway in order to establish secure sessions with a back-end system. The network identifier is programmed during manufacturing, and the same network identifier is also used by a new node that replaces a defective node in the field. The mesh routing protocol is such that nodes will try to connect to a parent device that provides the best received signal strength indicator (RSSI), for example. Such a protocol can lead a node to establish a route (e.g. via parent nodes) to a gateway operating at full capacity. In these conditions, the gateway will not authorize the new node to join because it is at full capacity.

When the gateway is at full capacity, the node cannot determine whether its requests were ignored or whether they were received by the gateway, it continues to send these requests until the occurrence of one of three events. It continues until (i) the node is power-cycled, (ii) the gateway is power-cycled, or (iii) its parent node is power-cycled. The inability of nodes to determine whether an edge router (i.e. a gateway device) is maxed out is problematic. The problem arises because the network will operate unbalanced in the situation where a gateway loses power. When this happens, its nodes attempt to migrate to neighboring gateways that are already maxed out or that will quickly become maxed out.

To re-balance the network, a manual restart of the gateways may force the mesh network to reform. This is challenging, as a manual restart does not guarantee the mesh will become balanced and that gateways will not be maxed-out faster, leaving nodes unreachable/unregistered.

### SUMMARY

The embodiments featured herein resolve the above-noted deficiencies as well as other deficiencies known in the art.

One embodiment provides a method for load balancing in a mesh network. The method includes receiving, by a node, a signal from a first gateway device of the mesh network. Further, the method can include determining, by the node and based on the signal, whether a condition for connecting to the gateway device is satisfied. The method also includes initiating, by the node, a first connection with the first gateway device when the condition is satisfied. A second connection is initiated between the node and a second gateway device for which the condition is not satisfied, when the first gateway device is at full capacity.

Another embodiment provides a non-transitory computer-readable medium that includes instructions stored thereon, and that, when executed by the processor, cause the processor to perform certain operations related to load balancing in a mesh network. The operations include receiving a signal from a first gateway device of the mesh network and determining, based on the signal, whether a condition for connecting to the first gateway device is satisfied. The operations also include initiating a first connection with the gateway device when the condition is satisfied, or initiating a second connection between the node and a second gateway device for which the condition is not satisfied, when the first gateway device is at full capacity.

Additional features, modes of operations, advantages, and other aspects of various embodiments are described below with reference to the accompanying drawings. It is noted that the present disclosure is not limited to the specific embodiments described herein. These embodiments are presented for illustrative purposes. Additional embodiments, or modifications of the embodiments disclosed, will be readily apparent to persons skilled in the relevant art(s) based on the teachings provided.

### BRIEF DESCRIPTION OF THE DRAWINGS

Illustrative embodiments may take form in various components and arrangements of components. Illustrative embodiments are shown in the accompanying drawings, throughout which like reference numerals may indicate corresponding or similar parts in the various drawings. The drawings are for purposes of illustrating the embodiments and are not to be construed as limiting the disclosure. Given the following enabling description of the drawings, the novel aspects of the present disclosure should become evident to a person of ordinary skill in the relevant art(s).
FIG. 1 is an illustration of a luminaire, according to an embodiment.
FIG. 2 is an illustration of a system, according to an embodiment.
FIG. 3 is an illustration of a typical scenario in mesh networks having multiple nodes and multiple gateway devices.
FIG. 4 is an illustration of a load balancing scenario, according to an embodiment.
FIG. 5 is an illustration of a method, according to an embodiment.
FIG. 6 is a block diagram of a device, according to an embodiment.

### DETAILED DESCRIPTION

While the illustrative embodiments are described herein for particular applications, it should be understood that the present disclosure is not limited thereto. Those skilled in the art and with access to the teachings provided herein will recognize additional applications, modifications, and embodiments within the scope thereof and additional fields in which the present disclosure would be of significant utility.

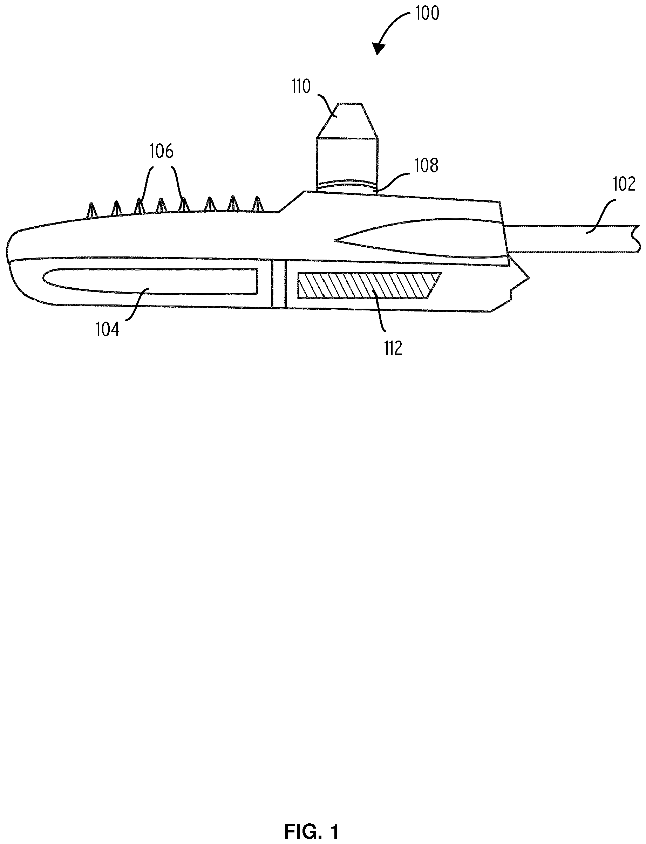

FIG. 1 is an illustration of a luminaire 100, according to an embodiment. The luminaire 100 can be mounted on a horizontal bar 102 extending from a vertical pole (not shown). Generally speaking, however, the mounting configuration of luminaire 100 can be arbitrary.

Luminaire 100 can include one or more light sources, such as light emitting diodes, for example. The light sources can be located in a cavity 104 of luminaire 100. Cavity 104 is equipped with a transparent glass or plastic cover to isolate the light sources from the elements. The glass cover may or may not serve as a lens.

Luminaire 100 also includes a fin 106 configured to passively allow heat to be extracted from electrical components within the body of luminaire 100 during operation. Furthermore, luminaire 100 includes a receptacle 108 (e.g. an ANSI C136.41 Photoelectric Element (PE) receptacle or socket) configured to mate with a node 110, providing a plurality of functionalities to luminaire 100.

Node 110 provides wireless connectivity to a data center to allow an operator to control one or more functions of luminaire 100. For example, an operator can remotely program luminaire 100 via node 110 to turn on or off at specific times. Alternatively, luminaire 100 can be programmed to alter its lumen output at given time periods of the day.

In another example, an operator can obtain power consumption data from luminaire 100 for billing purposes. In yet another example, an operator obtains maintenance and/or operational status data for luminaire 100 in order to dispatch a technician to service luminaire 100. Generally speaking, luminaire 100 can be part of a wireless network, or a power line communication network, and can be queried for data. It receives commands, and can automatically report data via node 110.

Luminaire 100 can include additional hardware components beyond those mentioned above. For example, luminaire 100 can include a camera mountable in a cavity accessible through door 112. Any one of the additional hardware components can be interfaced with node 110 to provide remote control, as described above.

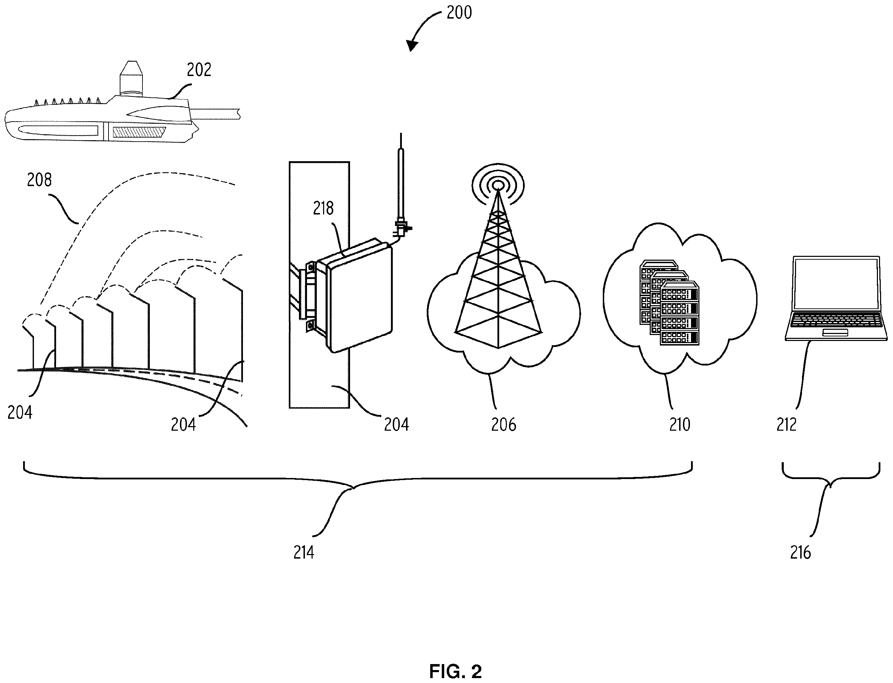

FIG. 2 is an illustration of a system 200, according to an embodiment. System 200 can be partitioned in a first portion 214 and in a second portion 216. The first portion 214 includes a plurality of luminaires 202, each being mountable on a pole 204 disposed in a geographical entity. For ease of description, FIG. 2 shows the geographical entity as being a road. However, other geographical entities, such as city blocks, parks, etc. can be used without departing from the scope of this disclosure.

Luminaires 202 can each be equipped with one wireless node, such as node 110 in FIG. 1. Each one of the nodes can be configured to broadcast and/or receive data from a network 208. In some embodiments, network 208 can be a Radio Frequency (RF) mesh network providing an interface to all of the nodes. The RF mesh network can be implemented according to standard mesh network practice. For example, network 208 can be implemented using the IEEE 802.15.4 6LowPAN standard, or using its past or future versions. Generally speaking, in some embodiments, network 208 can be implemented using an IEEE low-rate wireless personal area networks (LR-WPANs) standard.

One or more nodes of luminaires 202 can be coupled to a gateway device 218, which can be mounted on a pole 204. Gateway device 218 is configurable to interface with the one or more nodes in order to provide connectivity to another network 206, such as a cellular network. Network 206 can be a 3G or 4G cellular network, or a network implemented according to any past or future versions of cellular network protocols. Gateway device 218 can be pre-programmed to handle a maximum number of nodes. Once gateway device 218 is servicing the maximum number of nodes (i.e., at full capacity), it cannot service other nodes without first dropping one or more nodes currently being serviced, or unless the nodes currently being serviced either migrate to other gateway devices or they drop their connections.

In some embodiments, there is a maximum number of nodes (e.g. 3) serviceable by the gateway device 218. Furthermore, as one of skill in the art can readily appreciate, a given geographical entity can include a plurality of gateway devices such as gateway device 218, each servicing (at a given time) distinct groups of nodes, and where a single node is attached to one of luminaires 202.

Gateway device 218 (and any other gateway devices associated with network 208) can be managed by a central management system 210 via network 206. Central management system 210 can be configured to program gateway device 218. For example, in some embodiments, central management system 210 can assign a unique identifier to gateway device 218. Central management system 210 can assign a distinct and unique network identifier to each one of the gateway devices associated with network 208.

Second portion 216 of system 200 includes a terminal 212, including applications configured to interface with central management system 210 in first portion 214. In the embodiments, terminal 212 includes a web-based application configured to access, monitor, and manage gateway devices and nodes associated with network 208.

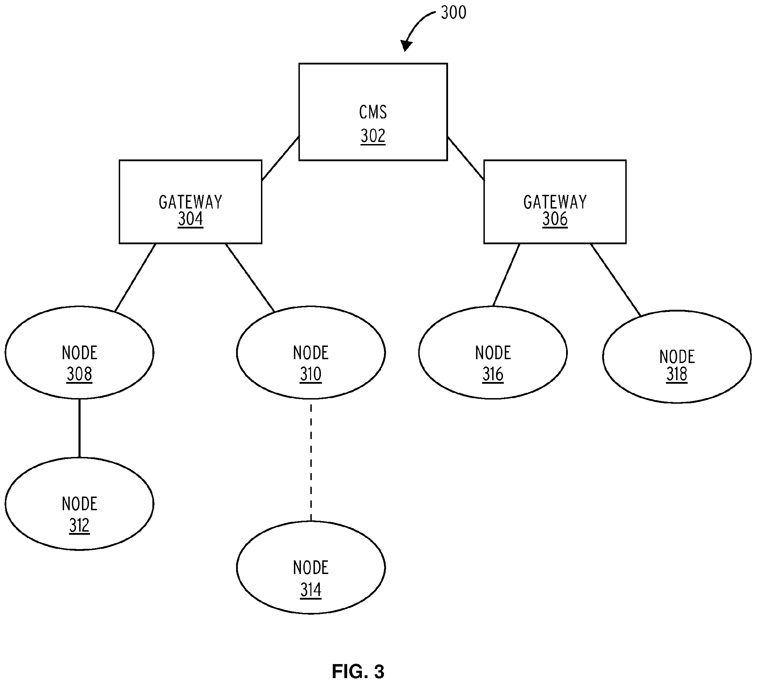

FIG. 3 is an illustration of a conventional scenario 300. A network, such as network 206, can interface with nodes 308, 310, and 312 that are connected to a gateway device 304. Nodes 316 and 318 are connected to a gateway device 306. Node 314 can be a free node, which at a given time, is seeking to connect to a gateway device of network 206. Gateway device 304 and gateway device 306, being on network 208, use the same network identifier. Generally speaking, in mesh networks, such as network 208, all gateway devices will have the same network identifier, which can be provided by central management system 302.

Node 314 can include hardware configured to evaluate information received from a plurality of gateway devices. Specifically, node 314 (and any other node in the network) can be configured to evaluate link qualities associated with multiple gateway devices. Node 314 may subsequently decide to connect to one particular gateway device for which one or more predetermined criteria are satisfied.

For example, a predetermined criterion could be the link quality (i.e. the RSSI) between the chosen gateway device and node 314 exceeding a threshold value. In other words, node 314 can be programmed to connect to the gateway device providing the highest link quality. However, any network parameter can be used as a predetermined criterion for connection between a node and a gateway device.

In FIG. 3, when gateway device 304 satisfies one or more predetermined criteria, node 314 will continuously seek to connect to gateway device 304. As such, there may be situations where node 314 remains unpaired to a gateway device. For example, when gateway device 304 is at full capacity (e.g. a maximum number of three nodes are already serviced by gateway device 304), node 314 will remain disconnected while continuously trying to connect to gateway device 304. While gateway device 306 is not at full capacity, node 314 will not connect to it because the one or more predetermined criteria are not satisfied for gateway device 306.

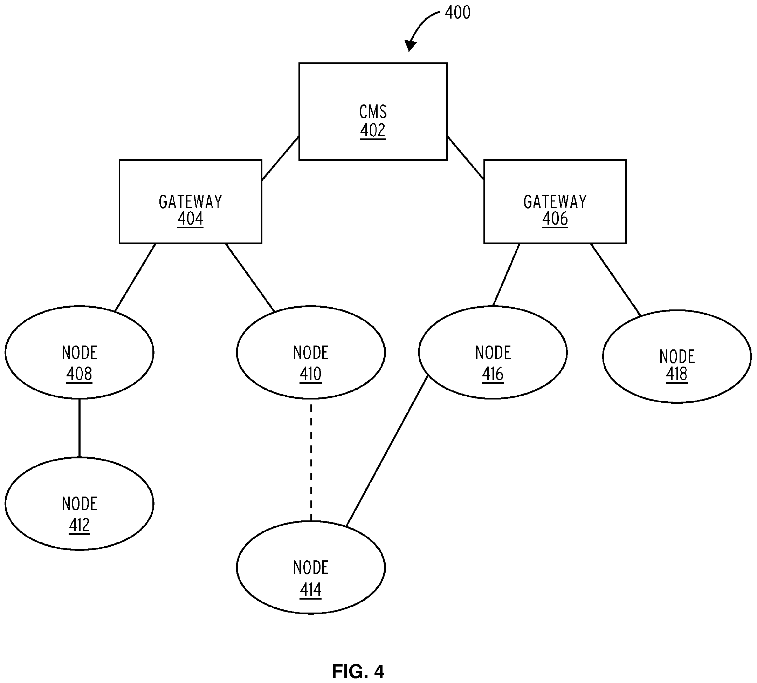

FIG. 4 is an illustration of a load balancing scenario 400, according to an embodiment. For example, in network 208, nodes 408, 410, and 412 are serviced by gateway device 404. Gateway device 406, along with nodes 416 and 418, are serviced by gateway device 406. And both gateway device 404 and gateway device 406 are managed by central management system 402.

In the exemplary embodiments, central management system 402 provides distinct and unique network identifiers to each of gateway device 404 and gateway device 406. For example, gateway device 404 can have a network identifier "NETW ID_A" and gateway device 406 can have a network identifier "NETW ID_B." Node 414, or any disconnected or unpaired node in the mesh network, is programmed to seek a gateway device for connection. A gateway device satisfying one or more predetermined criteria can be identified as the gateway device of choice for establishing a connection.

Furthermore, if more than one gateway device satisfies the one or more predetermined criterion, node 414 can chose the gateway device for which the criterion is optimum. For example, if more than one gateway device satisfies a minimum link quality threshold, node 414 can select the gateway device having the best link quality.

In one example, gateway device 404 is found by node 414 to have the best link quality. As such, node 414 seeks to connect to gateway device 404. However, gateway device 404 is at full capacity since it is already providing service to nodes 408, 410, and 412. After a time threshold or a predetermined number of attempts for which node 414 fails to connect to gateway device 404, node 414 successfully connects to gateway device 406. Connection can occur, although at a lesser link quality, because gateway device 406 is not at full capacity. As such, load balancing can occur seamlessly, and the number of unpaired nodes during a given time period and a given geographical entity can be minimized.

In the embodiments, nodes and/or gateway devices can be programmed to store, in their memories tables, network IDs of gateway devices in the mesh network. Accordingly, unpaired nodes may actively seek a gateway device for connection, and if unsuccessful because gateway device capacity has been reached, other gateway devices can be considered for connection using the corresponding programmed network identifier.

Different network IDs can be programmed in the node's memory and used by the node to connect to the gateway devices. The number of network IDs to program is commensurate with the total available memory and to a predetermined maximum number of network IDs that are to be used in a given mesh network. For example, in one embodiment, there may be four distinct network IDs that are used throughout the network. In such an embodiment, a node will cycle through the four different network IDs when attempting to connect to gateway devices. Furthermore, in other embodiments, two or more gateway devices may have the same network ID while other gateway devices have a distinct network ID.

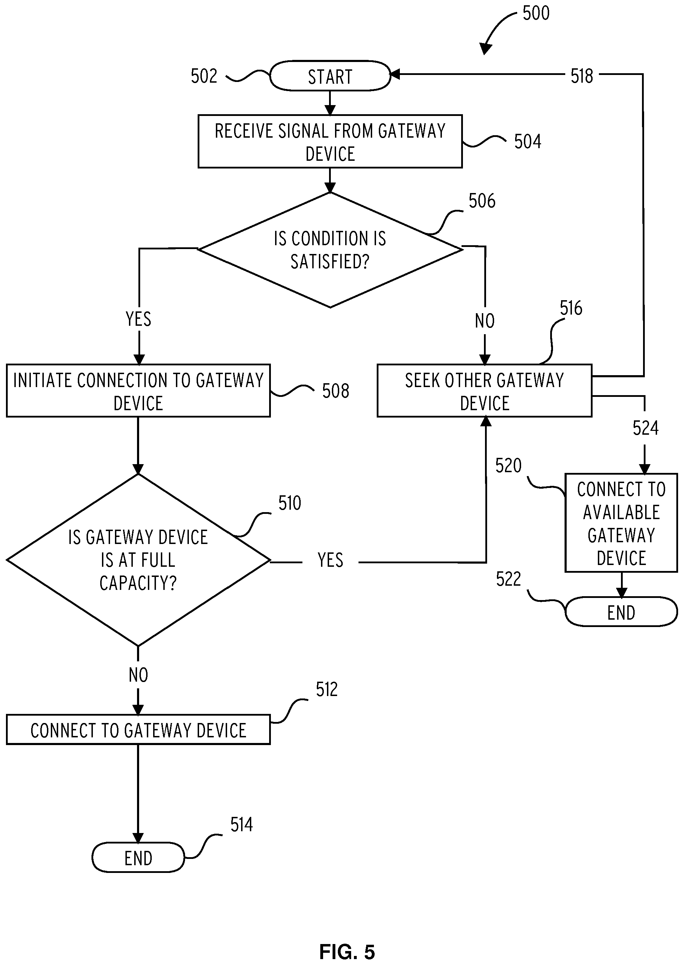

FIG. 5 is an illustration of a method 500, according to an embodiment. Method 500 begins at block 502 and includes receiving a signal from a first gateway device (block 504). The signal may be received by a node such as node 110 shown in FIG. 1. The signal may be received by the node after the node broadcast a request for connection to a gateway device in a mesh network, such as network 208.

Upon receiving the signal from the gateway device, the node evaluates the signal to determine whether a particular condition is satisfied (decision block 506). The condition can be any predetermined criterion. For example, a condition may be that the link quality exceeds a predetermined threshold value for link quality, which may be programmed in the node at manufacture or at commissioning.

When the condition is satisfied, the node initiates a first connection to the first gateway device (block 508) using the network identifier of the first gateway device. However, the first gateway device might be at full capacity. If after a predetermined number of unsuccessful attempts to connect to the first device, which may indicate that the first gateway device is at full capacity (decision block 510), the node may initiate a second connection to a second gateway device (block 516) using the network identifier of the second gateway device.

The second connection can also be initiated if the first connection is unsuccessful after a predetermined time period after the first connection is initiated. The node may also initiate the second connection when the condition is not satisfied (decision block 506). Moreover, the node may initiate the second connection after the node receives a message from the first gateway device indicating that the first gateway device is at full capacity and thus unavailable to service the node.

In the embodiments, once the second connection is initiated to the first gateway device, method 500 restarts at block 502. Method 500 continues in a loop 518 until the node finds a gateway device that (i) satisfies the condition and (ii) is less than full capacity. At this point it connects to the gateway device (block 512) and method 500 ends at block 514.

In other embodiments, the node may simply connect to another gateway device that is not at full capacity (i.e. path 524), even though the other gateway device may not satisfy the condition. For example, the node may connect to an available gateway device (i.e. not at full capacity), although its associated link quality may not satisfy the condition (block 520). Method 500 ends at block 522.

Method 500 is described above from the perspective of the node. However, one of ordinary skill in the art will recognize that the operations described above, and additional operations consistent with method 500, can be performed by the gateway devices. These operations can also be performed by a central management system (e.g. central management system 402).

For example, method 500 can include a gateway device broadcasting its capacity status in order to facilitate the load balancing functions described above. Method 500 can also include a central management system assigning a first network identifier to a first gateway device and a second network identifier to a second gateway device. The first and second network identifiers are distinct but also unique with respect to other network identifiers associated with the mesh network.

In the examples described above, the node may or may not directly connect to a particular gateway device. Specifically, in some instances, when the particular gateway device is not at full capacity, the node can simply make a connection to a parent node attached to the particular gateway device.

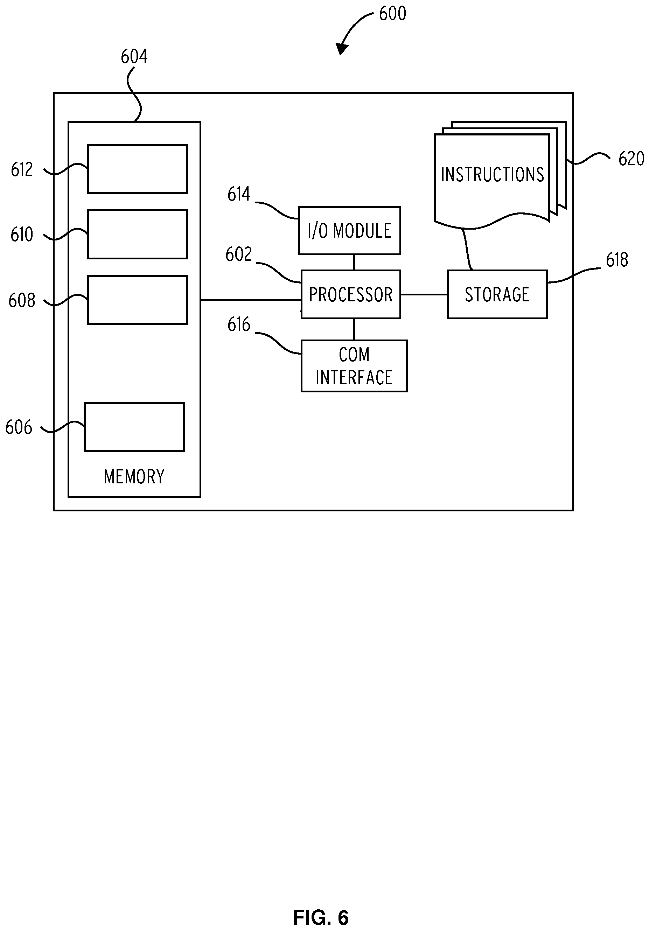

Having set forth various exemplary embodiments, a controller 600 (or system) consistent with their operation is now described. FIG. 6 depicts a block diagram of controller 600 including a processor 602 having a specific structure. The specific structure is imparted to processor 602 by instructions stored in a memory 604 included therein and/or by instructions 620 that can be fetched by processor 602 from a storage medium 618. The storage medium 618 can be co-located with controller 600 as shown, or can be located elsewhere communicatively coupled to controller 600.

Controller 600 can be a stand-alone programmable system, or a programmable module located in a larger system. For example, controller 600 can be part of a node, such as node 110 in FIG. 1. In some embodiments, a non-transitory computer-readable storage medium, including instructions stored thereon, can configure controller 600 to perform the operations described below.

Controller 600 includes one or more hardware and/or software components configured to fetch, decode, execute, store, analyze, distribute, evaluate, and/or categorize information. Furthermore, controller 600 includes an input/output (I/O) 614 configured to provide an interface for a technician to access and program memory modules with specific instructions. These instructions can include threshold values for desired link qualities, and a number of connection attempts the node can make before attempting to initiating another connection. The instructions relate to whether the node should function according to path 524 or loop 518 (see FIG. 5).In other embodiments, the node keeps trying to establish a connection with a gateway device for a predetermined amount of time before giving up and attempting to connect to another gateway.

Processor 602 includes one or more processing devices or cores (not shown). In the embodiments, processor 602 can be a plurality of processors, each having one or more cores. Processor 602 can be configured to execute instructions fetched from memory 604, i.e. from one of memory blocks 612, 610, 608, and 606. Alternatively, the instructions can be fetched from storage medium 618, or from a remote device connected to controller 600 via communication interface 616.

Furthermore, storage medium 618 and/or memory 604 can include a volatile or nonvolatile, magnetic, semiconductor, tape, optical, removable, non-removable, read-only, random-access, or any type of non-transitory computer-readable computer medium. Storage medium 618 and/or memory 604 can include programs and/or other information usable by processor 602. Storage medium 618 is configurable to log data processed, recorded, or collected during the operation of controller 600. The data may be time-stamped, location-stamped, cataloged, indexed, or organized in a variety of ways consistent with data storage practice.

In the exemplary embodiments, memory block 606 can include instructions that, when executed by processor 602, cause processor 602 to perform certain operations for performing load balancing in a mesh network, such as network 208. The operations can include receiving a signal from a first gateway device of the mesh network.

The operations include determining, based on the signal, whether a connecting condition for connecting to the first gateway device is satisfied. The operations also include initiating a first connection with the gateway device when the connecting condition is satisfied. Other operations initiate a second connection, between the node and a second gateway device, if the connecting condition is not satisfied, and when the first gateway device is at full capacity.

Additional operations include initiating the second connection after the node reaches a predetermined number of unsuccessful attempts to connect to the first gateway device or after the node has spent more than a predetermined amount of time trying to reach the gateway device unsuccessfully. The second connection can occur after the node reaches a predetermined number of unsuccessful attempts to connect to the first gateway device or when the predetermined amount of time has elapsed without the node establishing a connection to the first gateway. In alternate embodiments, initiating the second connection occurs after the node receives a message from the first gateway device indicating that the first gateway device is at full capacity.

In the embodiments, controller 600 can be part of a gateway device or part of a central management system. Here, controller 600 can still perform all the operations described above, in addition to performing several network-related tasks. For example, the operations assign a first network identifier to the first gateway device and a second network identifier to the second gateway device. The first and second network identifiers can be distinct from one another and unique in the mesh network.

Those skilled in the relevant art(s) will appreciate that various adaptations and modifications of the embodiments described above can be configured without departing from the scope and spirit of the disclosure. Therefore, it is to be understood that, within the scope of the appended claims, the disclosure may be practiced other than as specifically described herein.

Various aspects and embodiments of the present invention are defined by the following clauses:
1. A method, implemented in a node, for load balancing in a mesh network, comprising:
   receiving a signal from a first gateway device of the mesh network;
   determining, responsive to the signal, whether a condition for connecting to the first gateway device is satisfied;
   initiating a first connection with the first gateway device when the condition is satisfied; and
   initiating a second connection between the node and a second gateway device (i) when the condition is not satisfied and (ii) when the first gateway device is at full capacity.
2. The method of clause 1, wherein the mesh network is an RF mesh network.
3. The method of clause 1, wherein the mesh network is implemented according to an IEEE low-rate wireless personal area networks (LR-WPANs) standard.
4. The method of clause 1, wherein initiating the second connection occurs after the node performs a predetermined number of unsuccessful attempts to connect to the first gateway device.
5. The method of clause 1, wherein initiating the second connection occurs after a predetermined time period has expired and the node has not been connected to the first gateway device.
6. The method of clause 1, wherein initiating the second connection occurs after the node receives a message from the first gateway device indicating that the first gateway device is at full capacity.
7. The method of clause 1, further comprising establishing the second connection via a parent node associated with the second gateway device.
8. The method of clause 1, further comprising assigning a first network identifier to the first gateway device and a second network identifier to the second gateway device, the first network identifier being distinct from the second network identifier.
9. The method of clause 8, wherein the first network identifier and the second network identifier are unique in the mesh network.
10. A non-transitory computer-readable storage medium for performing load balancing in a mesh network that includes a node, the non-transitory computer-readable storage medium including instructions that when executed by a processor, cause the processor to perform operations comprising:
   receiving a signal from a first gateway device of the mesh network;
   determining, based on the signal, whether a condition for connecting the node to the first gateway device is satisfied;
   initiating a first connection with the first gateway device, using a first network identifier of the first gateway device, when the condition is satisfied; and
   initiating a second connection to a second gateway device, using a second network identifier of the second gateway device, (i) when the condition is not satisfied and (ii) when the first gateway device is at full capacity.
11. The non-transitory computer-readable storage medium of clause 10, wherein the mesh network is an RF mesh network.
12. The non-transitory computer-readable storage medium of clause 10, wherein initiating the second connection occurs either after the node performs a predetermined number of unsuccessful attempts to connect to the first gateway device or after a predetermined amount of time has elapsed without the node successfully connecting to the first gateway device.
13. The non-transitory computer-readable storage medium of clause 10, wherein initiating the second connection occurs after the node receives a message from the first gateway device indicating that the first gateway device is at full capacity.
14. The non-transitory computer-readable storage medium of clause 10, wherein the operations include retrieving the first network identifier and the second network identifier, the first network identifier being distinct from the second network identifier.
15. A system for performing load balancing a mesh network including a node, the system comprising:
   a processor; and
   a memory storing instructions that, when executed by the processor, cause the processor to perform operations comprising:
      receiving a signal from a first gateway device of the mesh network;
      determining, based on the signal, whether a condition for connecting the node to the first gateway device is satisfied;
      initiating a first connection with the first gateway device when the condition is satisfied; and
      initiating a second connection between the node and a second gateway device (i) when the condition is not satisfied and (ii) when the first gateway device is at full capacity.
16. The system of clause 15, wherein the mesh network is an RF mesh network.
17. The system of clause15, wherein initiating the second connection occurs either after the node performs a predetermined number of unsuccessful attempts to connect to the first gateway device or after a predetermined amount of time has elapsed without the node successfully connecting to the first gateway device.
18. The system of clause 15, wherein initiating the second connection occurs after the node has reached a predetermined number of unsuccessful attempts to connect to the first gateway device.
19. The system of clause 15, wherein initiating the second connection occurs after the node receives a message from the first gateway device indicating that the first gateway device is at full capacity.
20. The system of clause 15, further comprising assigning a first network identifier to the first gateway device and a second network identifier to the second gateway device, the first network identifier being distinct from the second network identifier.

## Claims

1. A method (500), implemented in a node (110, 408, 410, 412, 414, 416), for load balancing (400) in a mesh network (208), comprising:
receiving (504) a signal from a first gateway device of the mesh network (208);
determining (506), responsive to the signal, whether a condition for connecting to the first gateway device is satisfied;
initiating (508) a first connection with the first gateway device when the condition is satisfied; and
initiating (516) a second connection between the node (110, 408, 410, 412, 414, 416) and a second gateway device (i) when the condition is not satisfied and (ii) when the first gateway device is at full capacity.

2. The method (500) of claim 1, wherein the mesh network (208) is an RF mesh network and the mesh network (208) is implemented according to an IEEE low-rate wireless personal area networks (LR-WPANs) standard.

3. The method (500) of claim 1 or claim 2, wherein initiating (516) the second connection occurs after the node (110, 408, 410, 412, 414, 416) performs a predetermined number of unsuccessful attempts to connect to the first gateway device.

4. The method (500) of claim 1, wherein initiating (516) the second connection occurs after a predetermined time period has expired and the node (110, 408, 410, 412, 414, 416) has not been connected to the first gateway device.

5. The method (500) of claim 1, wherein initiating (516) the second connection occurs after the node (110, 408, 410, 412, 414, 416) receives a message from the first gateway device indicating that the first gateway device is at full capacity.

6. The method (500) of any preceding claim, further comprising establishing the second connection (516) via a parent node associated with the second gateway device.

7. The method (500) of any preceding claim, further comprising assigning a first network identifier to the first gateway device and a second network identifier to the second gateway device, the first network identifier being distinct from the second network identifier; wherein the first network identifier and the second network identifier are unique in the mesh network (208).

8. A non-transitory computer-readable storage medium for performing load balancing (400) in a mesh network (208) that includes a node (110, 408, 410, 412, 414, 416), the non-transitory computer-readable storage medium including instructions that when executed by a processor (602), cause the processor (602) to perform operations comprising:
receiving (504) a signal from a first gateway device of the mesh network (208);
determining (506), based on the signal, whether a condition for connecting the node (110, 408, 410, 412, 414, 416) to the first gateway device is satisfied;
initiating (508) a first connection with the first gateway device using a first network identifier of the first gateway device, when the condition is satisfied; and
initiating (516) a second connection to a second gateway device, using a second network identifier of the second gateway device, (i) when the condition is not satisfied and (ii) when the first gateway device is at full capacity.

9. The non-transitory computer-readable storage medium of claim 8, wherein initiating (508) the second connection occurs either after the node (110, 408, 410, 412, 414, 416) performs a predetermined number of unsuccessful attempts to connect to the first gateway device or after a predetermined amount of time has elapsed without the node (110, 408, 410, 412, 414, 416) successfully connecting to the first gateway device and wherein the mesh network (208) is an RF mesh network.

10. The non-transitory computer-readable storage medium of claim 8, wherein initiating the second connection occurs after the node (110, 408, 410, 412, 414, 416) receives a message from the first gateway device indicating that the first gateway device is at full capacity and wherein the operations include retrieving the first network identifier and the second network identifier, the first network identifier being distinct from the second network identifier.

11. A system (600) for performing load balancing a mesh network (208) including a node (110, 408, 410, 412, 414, 416), the system (600) comprising:
a processor (602); and
a memory (604) storing instructions that, when executed by the processor (602), cause the processor (602) to perform operations comprising:
receiving (504) a signal from a first gateway device of the mesh network (208);
determining (506), based on the signal, whether a condition for connecting the node (110, 408, 410, 412, 414, 416) to the first gateway device is satisfied;
initiating (508) a first connection with the first gateway device when the condition is satisfied; and
initiating (516) a second connection between the node (110, 408, 410, 412, 414, 416) and a second gateway device (i) when the condition is not satisfied and (ii) when the first gateway device is at full capacity.

12. The system (600) of claim 11, wherein initiating (516) the second connection occurs either after the node (110, 408, 410, 412, 414, 416) performs a predetermined number of unsuccessful attempts to connect to the first gateway device or after a predetermined amount of time has elapsed without the node (110, 408, 410, 412, 414, 416) successfully connecting to the first gateway device; wherein the mesh network (208) is an RF mesh network..

13. The system (600) for of claim 11, wherein initiating (516) the second connection occurs after the node (110, 408, 410, 412, 414, 416) has reached a predetermined number of unsuccessful attempts to connect to the first gateway device.

14. The system (600) for of claim 11, wherein initiating the second connection occurs after the node (110, 408, 410, 412, 414, 416) receives a message from the first gateway device indicating that the first gateway device is at full capacity.

15. The system (600) of any of claims 11 to 14, further comprising assigning a first network identifier to the first gateway device and a second network identifier to the second gateway device, the first network identifier being distinct from the second network identifier.
